Europäisches Patentamt

European Patent Office

Office européen des brevets

(11) Veröffentlichungsnummer: **0 101 987**
**A2**

(12) **EUROPÄISCHE PATENTANMELDUNG**

(21) Anmeldenummer: 83107774.8

(22) Anmeldetag: 06.08.83

(51) Int. Cl.³: **B 60 C 9/22**

(30) Priorität: 25.08.82 DE 3231547

(43) Veröffentlichungstag der Anmeldung:
07.03.84 Patentblatt 84/10

(84) Benannte Vertragsstaaten:
DE FR GB IT

(71) Anmelder: METZELER KAUTSCHUK GMBH
Gneisenaustrasse 15
D-8000 München 50(DE)

(72) Erfinder: Kronthaler, Peter, Dr.
Alte Allee 56
D-8000 München 60(DE)

(74) Vertreter: Michelis, Theodor, Dipl.-Ing.
Gneisenaustrasse 15
D-8000 München 50(DE)

(54) Luftreifen für Zweiradfahrzeuge.

(57) Ein Luftreifen für Zweiradfahrzeuge, insbesondere für Motorräder, weist eine mehrlagige Diagonalkarkasse, gegebenenfalls einen zweilagigen Gürtel auf der Diagonalkarkasse und eine Lauffläche auf; unter der Lauffläche, also auf der Diagonalkarkasse oder auf dem Gürtel, ist symmetrisch zur Reifenmitte mindestens eine Cordbahn angeordnet, deren Fäden in einem Winkel von 0 bis 5°, insbesondere von 0°, zur Umfangsrichtung verlaufen. Als Material für diese zusätzliche Cordbahn können Aramidfasern, Polyamidfasern, Polyester oder Stahlcord verwendet werden.

EP 0 101 987 A2

**0101987**

METZELER KAUTSCHUK GMBH

München, den 3.8.1983
Unser Zeichen: MK 129 P 82 EP

Luftreifen für Zweiradfahrzeuge

Die Erfindung betrifft einen Luftreifen für Zweiradfahrzeuge, insbesondere Motorräder, der im Oberbegriff des Anspruchs 1 angegebenen Gattung.

Die üblichen Motorradreifen weisen eine mehrlagige Diagonalkarkasse sowie eine Lauffläche auf; als Alternative hierzu sind noch Motorradreifen bekannt, bei denen auf einer mehrlagigen Diagonalkarkasse ein mehrlagiger, insbesondere zweilagiger Gürtel angeordnet ist; ein solcher Reifen wird auch als "Bias Belted" bezeichnet.

Zu den wesentlichen Problemen bei der Entwicklung von Motorradreifen gehören die Verringerung des Rollwiderstandes, die Verbesserung der Fahrstabilität, insbesondere in Richtung einer Vermeidung des "Pendelns" beim Fahren um die Gleichgewichtslage, sowie die Verringerung der Fliehkraftverformung. Die Eigenschaften herkömmlicher Motorradreifen sind bei Berücksichtigung dieser Parameter nicht optimal und damit verbesserungsbedürftig.

Der Erfindung liegt deshalb die Aufgabe zugrunde, einen Luftreifen für Zweiradfahrzeuge, insbesondere für Motorräder, der angegebenen Gattung zu schaffen, bei dem die oben erwähnten Parameter verbessert sind.

Insbesondere soll ein Luftreifen vorgeschlagen werden, der einen geringeren Rollwiderstand, eine bessere Fahrstabilität und eine geringere Fliehkraftverformung hat.

Dies wird erfindungsgemäß durch die im kennzeichnenden Teil des Anspruchs 1 angegebenen Merkmale erreicht.

Zweckmäßige Ausführungsformen sind in den Unteransprüchen zusammengestellt.

Die mit der Erfindung erzielten Vorteile beruhen insbesondere auf der Verwendung einer zusätzlichen Cordbahn, die unter der Lauffläche symmetrisch zur Reifenmitte angeordnet ist; diese zusätzliche Cordbahn kann sich entweder direkt auf der mehrlagigen Diagonalkarkasse oder bei einem Bias Belted-Reifen auf dem Gürtel befinden. Die Fäden dieser zusätzlichen Cordbahn, die beispielsweise aus Aramid-, Polyamid-, Polyester- oder Stahlfäden bestehen kann, verlaufen in einem Winkel von 0 bis 5° zur Umfangsrichtung, wobei besonders gute Werte bei einem Winkel von 0° erhalten werden.

Diese zusätzliche Cordbahn führt zu einer Versteifung der Lauffläche symmetrisch zur Reifenmitte, so daß sich eine geringere Einfederung und damit ein kleinerer Rollwiderstand ergibt. Außerdem wird der Schräglaufkoeffizient des Luftreifens erhöht, wodurch sich eine Verbesserung der Fahrstabilität ergibt. Und schließlich wird die Fliehkraftverformung verringert, so daß zum einen das Fahrverhalten bei hoher Geschwindigkeit verbessert und zum anderen die Lebensdauer dieses Luftreifens verlängert wird.

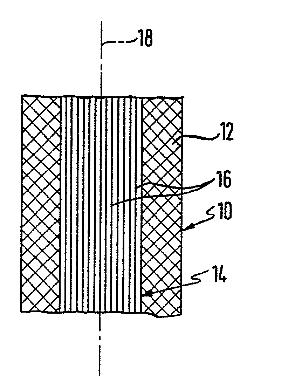

Die Erfindung wird im folgenden anhand eines Ausführungsbeispiels unter Bezugnahme auf die beiliegende Zeichnung näher erläutert, deren einzige Figur eine Draufsicht auf einen Luftreifen, jedoch ohne Lauffläche, zeigt.

Der allgemein durch das Bezugszeichen 10 angedeutete Luftreifen für Zweiräder, insbesondere für Motorräder, weist einen Unterbau 12 auf, der entweder aus der üblichen , mehrlagigen Diagonalkarkasse oder aus einer zweilagigen Diagonalkarkasse besteht, auf der sich ein mehrlagiger, insbesondere zweilagiger Gürtel befindet.

Auf diesem Unterbau 12 ist eine zusätzliche Cordbahn 14 symmetrisch zur Reifenmitte 18 angeordnet, d.h., die Breite der Cordbahn 14 auf den beiden Seiten der Reifenmitte 18 ist gleich. Die Cordbahn 14 erstreckt sich maximal bis zu den Schultern des Unterbaus 12, also beispielsweise der Diagonalkarkasse.

Die Fäden 16 der Cordbahn 14 verlaufen bei der dargestellten Ausführungsform in einem Winkel von 0° zur Umfangsrichtung; doch auch bei einem Winkel der Fäden 16 von bis zu 5° zur Umfangsrichtung , also zur Reifenmitte 18, ergeben sich noch akzeptable Ergebnisse.

Die Cordbahn 14 kann aus Aramidfasern, wie sie unter der Bezeichnung "Kevlar" angeboten werden, aus Polyamid-Fasern, wie sie unter der Bezeichnung "Nylon" angeboten werden, aus Kunstseide, wie sie unter der Bezeichnung "Reyon" angeboten wird, aus Polyester oder aus Stahlcord hergestellt werden.

Bei der Konfektion eines solchen Reifens erfolgt das Auflegen der zusätzlichen Cordbahn 14 zweckmäßigerweise im vorbombierten Zustand des Luftreifens. Besonders gute Ergebnisse wurden mit einer Endreckung von 3 bis 5 % erzielt.

Höhere Bombagen bis zum Auflegen der umlaufenden Fäden 16 auf die Trommel sind, wenn überhaupt, nur durch Stückeln und entsprechendes Überlappen bzw. Falten der Cordbahn 14 möglich.

0101987

METZELER KAUTSCHUK GMBH          Unser Zeichen: MK 129 P 82

Patentansprüche

1.   Luftreifen für Zweiradfahrzeuge, insbesondere Motorräder,
a) mit einer mehrlagigen Diagonalkarkasse, und
b) mit einer Lauffläche,
d a d u r c h   g e k e n n z e i c h n e t ,   daß
c) unter der Lauffläche symmetrisch zur Reifenmitte (18)
mindestens eine Cordbahn (14) angeordnet ist,
d) deren Fäden (16) in einem Winkel von 0 bis 5° zur Umfangsrichtung verlaufen.

2.   Luftreifen nach Anspruch 1, dadurch gekennzeichnet,
daß die Cordbahn (14) maximal bis zur Schulter der
Karkasse (12) verläuft.

3.   Luftreifen nach einem der Ansprüche 1 oder 2,
dadurch gekennzeichnet, daß die Cordbahn (14) aus
Aramiden, Polyamiden, Polyester oder Stahl besteht.

4.   Luftreifen nach einem der Ansprüche 1 bis 3,
dadurch gekennzeichnet, daß die Fäden (16) in einem
Winkel von 0° zur Umfangsrichtung verlaufen.

5.   Luftreifen nach einem der Ansprüche 1 bis 4,
dadurch gekennzeichnet, daß zwischen der Cordbahn (14)
und der zweilagigen Diagonalkarkasse eine mehrlagiger,
insbesondere zweilagiger, Gürtel angeordnet ist.